# EUROPÄISCHE PATENTSCHRIFT

(11) **EP 3 829 289 B1**
(45) Veröffentlichungstag und Bekanntmachung des Hinweises auf die Patenterteilung: **24.08.2022**
(21) Anmeldenummer: 19737492.9
(22) Anmeldetag: 01.07.2019
(51) Int. Cl.: A01D 45/02

(54) **VORSATZGERÄT ZUR ERNTE VON STÄNGELIGEM HALMGUT**
ATTACHMENT FOR HARVESTING STALK-LIKE STEM CROPS
APPAREIL ADAPTABLE POUR RÉCOLTER DES CULTURES CÉRÉALIÈRES DE TYPE TIGE

(30) Priorität: 03.08.2018 DE 102018118958
(43) Veröffentlichungstag der Anmeldung: 09.06.2021
(73) Patentinhaber: Carl Geringhoff GmbH & Co. KG, 59227 Ahlen (DE)
(72) Erfinder: SCHLAMANN, Frank, 48599 Gronau (DE)
(74) Vertreter: Weeg, Thomas
(86) Internationale Anmeldenummer: PCT/EP2019/067610
(87) Internationale Veröffentlichungsnummer: WO 2020/025236

(56) Entgegenhaltungen:
- EP-A1- 0 474 072
- EP-A1- 1 106 048
- EP-A2- 0 486 887
- DE-C1- 4 344 669
- FR-A1- 2 453 595
- US-A1- 2011 308 220

## Beschreibung

Die vorliegende Erfindung bezieht sich auf ein Vorsatzgerät zum Anbau an eine Erntemaschine mit einer Anzahl von nebeneinander über die Arbeitsbreite verteilt angeordneten Pflückvorrichtungen, die Pflückvorrichtungen weisen jeweils einen von Pflückplatten seitlich begrenzten Pflückspalt auf, unter denen zumindest ein erster und ein zweiter gegenläufig rotierend antreibbarer Pflückrotor angeordnet sind, die Pflückrotoren sind jeweils mit mehreren in radialer Richtung hervorstehenden an Einzugskörpern ausgebildeten Einzugskanten versehen, deren Hüllkreise ineinander kämmen, und benachbarte Einzugskanten des ersten Pflückrotors begrenzen zwischen sich innerhalb des Hüllkreises gelegene Zwischenräume, die sich entlang der Längsrichtung des ersten Pflückrotors erstrecken und in die die Einzugskanten des gegenüberliegenden zweiten Pflückrotors während eines Umlaufs der ersten und zweiten Pflückrotoren eintauchen.

Ein gattungsgemäßes Vorsatzgerät ist beispielsweise aus der Schrift DE 1 972 327 bekannt. Die dort offenbarten Pflückrotoren sind aus vier rechtwinkligen Profilen mit L-förmigem Querschnitt so zusammengesetzt, dass die Profile mit ihren längeren Schenkeln einen quadratischen Innenraum begrenzen und die kurzen Schenkel zusammen mit einem anliegenden Überstand der längeren Schenkel jeweils einen doppellagigen Flügel bilden, der vom Rotorkern absteht und jeweils als Einzugskörper dient, um einen Pflanzenstängel nach unten zu reißen. Eine derartige Einzugsleiste bildet einen Einzugskörper, der dazu dient, einen Pflanzenstängel zu erfassen, nach unten zu ziehen und dabei zu quetschen und/oder zu schneiden.

Die nach außen weisenden Stirnflächen der Flügel sind abgeschrägt und bilden dadurch schneidenartige Einzugskanten aus, mit denen die von ihnen erfassten Pflanzenstängel angeschnitten werden. Die Flügel sollen die Pflanzenstängel in dieser Ausführung jedoch nicht durchschneiden, sondern nur eine große Pflückkraft auf die Pflanzen ausüben. Es ist beschrieben, dass die Pflückrotoren paarweise so zueinander angeordnet sind, dass die Einzugskanten der Flügel bei der Rotation der Pflückrotoren so ineinander kämmen, dass sie sich in engem Abstand passieren, ohne sich dabei jedoch zu berühren.

In der Schrift DE 91 05 932 sind Pflückrotoren beschrieben, deren Pflückrotoren so zueinander in ihrer Drehstellung versetzt angeordnet und deren Einzugsleisten als Einzugskörper so gekrümmt sind, dass in etwa der ersten Hälfte des dem Eingriffsbereich zugeordneten Drehwinkels die Außenkante der Schneidleiste an der voreilenden Einzugswalze in etwa gleichbleibendem Abstand an der gekrümmten Fläche der Einzugsleiste der korrespondierenden Einzugsleiste der nacheilenden Einzugswalze vorbeistreicht, und zwar von außen nach innen. Die Einzugskörper der zusammenwirkenden Pflückrotoren sind in unterschiedlichen Richtungen gekrümmt: während alle Einzugskörper eines Pflückrotors in Rotationsrichtung vorauseilend gekrümmt sind, weisen alle Einzugskörper des gegenüberliegenden Pflückrotors eine Krümmung in eine nacheilende Richtung auf. Bei dieser Anordnung ergeben sich bei einem vollen Umlauf der Pflückrotoren zwei Stellungen, in denen die zusammenwirkenden Einzugskörper einen Pflanzenstängel schneiden, und zwar direkt beim Einlauf in den Wirkbereich der Pflückrotoren und beim Auslauf aus dem Wirkbereich.

Der Schnitt schon in der Einlaufzone ist problematisch, weil nach dem Schnitt vom abgeschnittenen Abschnitt des Pflanzenstängels keine Zugkräfte nach unten mehr auf den noch nicht geschnittenen Teil des Pflanzenstängels übertragen werden können. Der Pflanzenstängel wird also nur wenig effektiv nach unten beschleunigt. Dies hat unmittelbar nachteilige Auswirkungen auf die Pflückqualität beim Abpflücken der Fruchtstände. Wenn die Pflanzenstängel keine ausreichende Bewegungsgeschwindigkeit nach unten haben, kommt es vor, dass Kolben nicht gepflückt oder beim Pflücken gequetscht werden, woraus sich unmittelbar Gutverluste ergeben. Genauso besteht das Problem, dass der Pflückspalt bei einer zu geringen Abfördergeschwindigkeit des Pflanzenstängels zu kurz sein kann, wenn die zu erntenden Pflanzen groß gewachsen sind. Im Ergebnis wird die Pflanze nicht mehr mit ihrer vollen Länge eingezogen und kleingehäckselt, sondern die Enden bleiben unbearbeitet. Eine effektive Beschleunigung und Abförderung der Pflanzenstängel nach unten ist deshalb wichtig.

Der Pflückrotor mit den vorauseilend gekrümmten Einzugskörpern erfasst zwar den Pflanzenstängel gut und beschleunigt diesen nach unten hin, durch die nacheilende Form der Einzugskörper auf dem gegenüberliegenden Pflückrotor überträgt dieser Pflückrotor jedoch praktisch keine Beschleunigungskräfte auf den Pflanzenstängel, dessen Einzugskörper bilden nur eine Stütze für den Pflanzenstängel während des Einzugs und des Schnittes.

Ein weiteres gattungsgemäßes Vorsatzgerät ist aus der Schrift EP 0 486 887 A2 bekannt. Die dort offenbarten Einzugskanten der Pflückrotoren drücken die Pflanzenstängel bei einer Rotationsbewegung in die Richtung des gegenüberliegenden Pflückrotors, so dass ein Pflanzenstängel bei seinem Durchlauf durch den Spalt zwischen den Pflückrotoren mehrfach gegenläufig geknickt wird. Der Pflanzenstängel wird aber erst unterhalb der Pflückrotoren mit dort angebrachten stationären Messerklingen geschnitten. Der Pflanzenstängel wird mit diesem Vorsatzgerät unsauber geschnitten, weil die Schnittlänge der geschnittenen Stängelstücke von variablen Faktoren wie einem Schlupf zwischen dem Pflanzenstängel und den Pflückrotoren, der Zuführgeschwindigkeit des Pflanzenstängels auf die Messerklingen, die Winkelstellung des Pflanzenstängels im Verhältnis zu den Messerklingen und der Dicke des jeweiligen Pflanzenstängels abhängt. Die stationären Messerklingen können leicht durch Fremdkörper beschädigt werden. Da für die stationären Messerklingen gesonderte Halterungen erforderlich sind, s der Bauaufwand und das Gewicht für ein solches Vorsatzgerät unnötig hoch.

Bei den bekannten Anordnungen der Einzugskanten und Messerklingen zueinander werden die Pflanzenstängel üblicherweise auf der Seite des Pflanzenstängels geschnitten, der von den Einzugskanten gestaucht worden ist. Dadurch kommt es immer wieder vor, dass Pflanzenstängel nicht sauber geschnitten werden. Entweder werden die Pflanzenstängel von zwei Seiten her gleichzeitig geschnitten, dann ist es schwierig, eine Zugkraft auf den Pflanzenstängel zu übertragen, mit der der Stängel nach unten gezogen und die Fruchtstände an den Pflückplatten vom Pflanzenstängel abgetrennt werden, oder die Pflanzenstängel werden wechselseitig von jeweils einer Seite her geschnitten, wodurch sich dann der Schnitt an den bereits gestauchten Stellen ergibt. Aus dem unregelmäßigen Schnitt ergibt sich auf dem geernteten Feld ein unsauberes Erntebild. Die zu langen Stängelstücke verrotten schlechter als kürzer geschnittene Stängelstücke und behindern dadurch die Aussaat und den Aufwuchs der Folgefrucht. Unsaubere Schnitte sind zudem kraftraubend, wodurch die für den Betrieb des Vorsatzgerätes erforderlichen Antriebsleistungen steigen. Die höheren Antriebsleistungen machen das Vorsatzgerät teurer und schwerer, insbesondere, wenn es über eine größere Zahl von Pflückvorrichtungen verfügt.

Es ist die Aufgabe der vorliegenden Erfindung, die von einer Pflückvorrichtung ausgeführten Schnitte zu verbessern, indem die Schnitte zuverlässiger und mit einem geringeren Kraftbedarf erfolgen.

Die Aufgabe wird für ein gattungsgemäßes Vorsatzgerät gelöst, indem die Einzugskanten an den Einzugskörpern auf dem ersten und zweiten Pflückrotor so im Verhältnis zueinander angeordnet sind, dass während einer Umlaufbewegung des ersten und zweiten Pflückrotors zwei benachbarte Einzugskanten des ersten Pflückrotors in ihrem Wirkbereich in die nach unten gerichtete Bewegungsbahn eines Pflanzenstängels den Pflanzenstängel zeitweise gegen die im Verhältnis zu den zwei benachbarten Einzugskanten des ersten Pflückrotors vor- und nacheilenden Einzugskanten des zweiten Pflückrotors gedrückt halten und den Pflanzenstängel durch die vier Anlagepunkte des Pflanzenstängels an die Einzugskanten des ersten und zweiten Pflückrotors in eine dem Hüllkreis des ersten Pflückrotors angenäherte Bogenform spannen, und auf dem zweiten Pflückrotor eine Messerklinge zwischen den vor- und nacheilenden Einzugskanten des zweiten Pflückrotors angeordnet ist, die in die Außenseite des in Bogenform gespannten Pflanzenstängels einschneidet.

Wenn nachfolgend von einem ersten und einem zweiten Pflückrotor die Rede ist, so dient diese Differenzierung nur der Unterscheidung der beiden Pflückrotoren in einer bestimmten Drehstellung zueinander. Wenn auf beiden Pflückrotoren Messerklingen angeordnet sind, wechselt die Zuordnung zwischen dem ersten und dem zweiten Pflückrotor wechselweise je nach Drehstellung der beiden Pflückrotoren zueinander im Verlauf einer Umdrehung hin und her. Mit dem ersten Pflückrotor kann also je nach Drehstellung der beiden Pflückrotoren zueinander sowohl der rechte als auch der linke Pflückrotor eines Pflückrotorpaares gemeint sein, entsprechendes gilt für den zweiten Pflückrotor.

Durch die besondere Anordnung der Einzugskanten und der Messerklinge zueinander wird der Pflanzenstängel beim Schnitt so in der Schnittposition gehalten, dass die Messerklinge in den Pflanzenstängel von der vorgespannt gehaltenen Seite her einschneidet. Durch die Vorspannung kann der Pflanzenstängel der Messerklinge nicht mehr so weit zur Seite hin ausweichen, wie er das ohne eine Vorspannung könnte. Die Vorspannung des Pflanzenstängels bewirkt außerdem, dass die in Grenzen elastischen Zellen der Stützstruktur des Pflanzenstängels bereits in Zugrichtung vorgespannt sind. Durch die Vorspannung ist die Elastizität der Zellen quer zur Schnittrichtung verringert, so dass die Messerklinge leichter in die Zellmasse eindringen und diese durchtrennen kann. Während der Durchtrennbewegung ergibt sich dabei eine Art Reißverschlusseffekt: es sind immer genau die Zellen am stärksten vorgespannt, die gerade von der Messerklinge geschnitten werden, weil auf diesen Zellen nach dem Abtrennen der weiter außen liegenden Zellen die größte Zuglast anliegt. Es kommt bei diesem Schnitt also nicht dazu, dass ungeschnittene Zellpakete zunächst nur von der Messerklinge aufeinandergedrückt und diese dann erst danach mit erhöhter Kraft durchgehackt werden müssen, sondern es wird ein glatter Schnitt ermöglicht, bei dem die von der Messerklinge erfassten Zellen kontinuierlich über die Schnittbewegung hinweg durchgetrennt werden.

Die für den Schnitt eines Pflanzenstängels erforderlichen Kräfte können dadurch geringer gehalten werden. Die Konstruktion und der Betrieb des Vorsatzgeräts werden dadurch leichter und günstiger. Das Schnittbild des abgeernteten Feldes ist gleichmäßiger. Zudem wird die Aussaat und der Aufwuchs der Folgefrucht erleichtert.

Die Vorspannung des Pflanzenstängels ist im Schnittbereich insbesondere erhöht, wenn der Pflanzenstängel von zumindest zwei Einzugskanten des ersten Pflückrotors in der Schnittposition gehalten wird. Durch die zwei Einzugskanten passt sich der Pflanzenstängel stärker dem Kreisbogen des Hüllkreises des Pflückrotors beziehungsweise der Einzugskanten an. Bei nur einer einzigen Einzugskante ergibt sich leicht ein Knick im Pflanzenstängel, bei dem der Pflanzenstängel im Stützbereich zusammengedrückt wird und danach auch im benachbarten Bereich um die Stützstelle herum weniger gut in einem glatten Schnitt geschnitten werden kann. Durch die zwei benachbarten, aber beabstandet zueinander angeordneten Einzugskanten am ersten Pflückrotor ist es möglich, zwischen den Kontaktpunkten des Pflanzenstängels mit diesen Einzugskanten zu schneiden, in dem der Pflanzenstängel noch nicht eingedrückt worden ist.

Mit den benachbarten, aber vorzugsweise auch beabstandet zueinander angeordneten beiden Einzugskanten gelingt es auch besser, den Pflanzenstängel trotz des dazwischen erfolgenden Schnittes in einer flüssigen Bewegung nach unten zu halten. Durch die bogenförmige Anlage des Pflanzenstängels an den Hüllkreis der Einzugskanten und die Abfolge der Kontaktpunkte des Pflanzenstängels mit den benachbarten Einzugskanten des ersten Pflückrotors mit der nacheilenden Einzugskante des zweiten Pflückrotors und dem Querversatz zwischen diesen Kontaktpunkten bleibt zumindest ein Teil der Zugkraft, mit der Pflanzenstängel nach unten gezogen wird, auch dann noch erhalten, nachdem der Pflanzenstängel von der Messerklinge geschnitten worden ist. Ein Pflanzenstängel kann dabei zwischen der nacheilenden Einzugskante des ersten Pflückrotors und der nacheilenden Einzugskante des zweiten Pflückrotors je nach Größe des verbleibenden Spaltes und dem Durchmesser des Pflanzenstängels auch noch gequetscht gehalten sein, wodurch sich die Förderaggressivität der Pflückvorrichtung erhöht.

Nach einer Ausgestaltung der Erfindung ragen die Hüllkreise der zwei benachbarten Einzugskanten des ersten Pflückrotors über die Vorderkante der darüber angeordneten Pflückplatte in die nach unten gerichtete Bewegungsbahn eines zwischen den Pflückplatten nach unten gezogenen Pflanzenstängels hinein. Da die Vorderkante der Pflückplatte den Pflanzenstängel in seiner Bewegungsbahn nach unten seitlich abstützt, ergibt sich durch den Vorsprung der Hüllkreise der Einzugskanten bereits eine erzwungene Anlage des Pflanzenstängels an die in einem Kreisbogen verlaufenden Hüllkreise der Einzugskanten, wenn der Pflanzenstängel unter Zug nach unten hin abgefördert wird.

Nach einer Ausgestaltung der Erfindung ragen auch die Hüllkreise der zu den zwei benachbarten Einzugskanten des ersten Pflückrotors vor- und nacheilenden Einzugskanten des zweiten Pflückrotors über die Vorderkante der darüber angeordneten Pflückplatte in die nach unten gerichtete Bewegungsbahn eines zwischen den Pflückplatten nach unten gezogenen Pflanzenstängels hinein. Insbesondere in Kombination mit den in entgegengesetzter Richtung vorstehenden Einzugskanten des ersten Pflückrotors ergibt sich eine zumindest doppelte Umlenkung eines Pflanzenstängels in Förderrichtung gesehen, bevor dieser geschnitten wird, wodurch sich eine gute Vorspannung im Schnittbereich einstellt.

Nach einer Ausgestaltung der Erfindung ist die Schnittbewegung der Messerklinge beim Umlauf des ersten und zweiten Pflückrotors in den Zwischenraum zwischen den zwei benachbarten Einzugskanten des ersten Pflückrotors gerichtet. Bei dieser Konstellation wird der Pflanzenstängel beim Schnitt auf beiden Seiten der Messerklinge von den benachbarten Einzugskanten gehalten und gegen die Schnittbewegung abgestützt. Dadurch kann die Spannung des Pflanzenstängels im Schnittbereich hoch gehalten werden, und der Pflanzenstängel wird der Messerklinge in einer Ausrichtung vorgehalten, die annähernd oder sogar genau quer zur Schnittebene der Messerklinge liegt. Dadurch wird die Schnittgenauigkeit und die Schnitteffizienz gefördert.

Nach einer Ausgestaltung der Erfindung ist auf dem ersten Pflückrotor eine Messerklinge zwischen den benachbarten Einzugskanten angeordnet, die mit der Messerklinge auf dem zweiten Pflückrotor interagiert. Eine Messerklinge bildet bei dieser Anordnung jeweils die Gegenschneide zur anderen Messerklinge, die sich bei einem Schnitt aufeinander zu und ab dem Totpunkt wieder voneinander weg bewegen. Bei dieser Kombination ergibt sich ein sehr sicherer und sauberer Schnitt des Pflanzenstängels.

Nach einer Ausgestaltung der Erfindung sind die Messerklingen einseitig angeschliffen. Durch den Anschliff können sich die Messerklingen bei jedem Umlauf übereinander hinwegbewegen und dabei reinigen. Die Schnittsicherheit wird dadurch nochmals erhöht. Die Messerklingen bleiben dadurch scharf und sauber.

Nach einer Ausgestaltung der Erfindung sind die Einzugskörper als auf einer Rotorwelle des Pflückrotors befestigte Winkelprofile ausgebildet. Die Winkelprofile sind robust, können hohe Kräfte aufnehmen und sind leicht montierbar. Die Einzugskörper können als ein L- oder U-Profil ausgebildet sein. Auf einer Rotorwelle können beispielsweise vier, acht, oder noch mehr oder weniger Einzugskörper angeordnet sein. Ein genau oder annähernd in radialer Richtung zur Rotorwelle weisender Schenkel eines Einzugskörpers kann zu dem auf der Rotorwelle aufgeschraubten Schenkel des Einzugskörpers in einem rechten Winkel oder in einem davon abweichenden Winkel ausgerichtet sein.

Nach einer Ausgestaltung der Erfindung sind die Messerklingen am äußeren Ende eines Schenkels eines Winkelprofils ausgebildet, das auf einer Rotorwelle eines Pflückrotors befestigt ist. Durch diese Konstruktion ist das Messer insgesamt sehr stabil und vermag hohe Kräfte aufzunehmen, ohne dabei beschädigt oder verformt zu werden. Es ist leicht montierbar, beispielsweise mit Schrauben, so dass es bei einem Verschleiß leicht ausgebaut und geschliffen oder komplett ausgetauscht werden kann.

Nach einer Ausgestaltung der Erfindung sind die Winkelprofile der Einzugskörper und die Winkelprofile der Messerklingen jeweils von gemeinsamen Schrauben auf der Rotorwelle gehalten. Die Montage wird dadurch vereinfacht. Die Winkelprofile der Messerklingen und der Einzugskanten können sich dabei gegenseitig abstützen und versteifen.

Nach einer Ausgestaltung der Erfindung bilden zwei Schenkel benachbarter Winkelprofile gemeinsam eine Messerklinge. Die Schenkel können back to back gegeneinander gesetzt montiert werden. Die Schenkel stützen sich dadurch unter Last gegenseitig ab und können so größere Kräfte aufnehmen. Wenn jedes Winkelprofil dabei mit dem rotorseitigen Schenkel an einer anderen Position mit der Rotorwelle verbunden wird, können die Winkelprofile der Einzugskanten mit einer einheitlichen Aufbauhöhe montiert werden, ohne dafür unterschiedliche Bauteile vorzusehen. Auch die back to back gegeneinander gesetzten Winkelprofile der Messerklingen können als ein Gleichteil verbaut werden.

Nach einer Ausgestaltung der Erfindung haben die Hüllkreise der Einzugskanten einen größeren Durchmesser als die Hüllkreise der Messerklingen. Die Einzugskanten drücken mit ihrem größeren Hüllkreis also einen Pflanzenstängel in der Schnittposition in eine Richtung auf die Messerklinge zu, wobei die Messerklinge mit ihrer Schnittkante vorteilhaft zumindest in den von den zugehörigen Einzugskanten gebildeten Hüllkreis eintaucht, um einen Pflanzenstängel auch möglichst sicher durchschneiden zu können. Vorteilhaft entspricht der Radius des Hüllkreises der Messerklingen eines Pflückrotors zumindest annähernd, jedoch maximal dem halben Abstandswert des Abstands der Rotorwellen voneinander, während der Radius des Hüllkreises der Einzugskanten eines Pflückrotors größer ist als der halbe Abstandswert des Abstands der Rotorwellen voneinander. Bei diesen Größenverhältnissen der Hüllkreise zueinander ergibt sich ein sicheres gutes Schneidverhalten bei immer noch guten Fördereigenschaften der Pflückrotoren.

Nach einer Ausgestaltung der Erfindung nehmen Zwischenräume zwischen benachbarten Einzugskanten des ersten und zweiten Pflückrotors unterschiedlich große Kreisbogenanteile ein, wobei die Messerklingen am ersten und zweiten Pflückrotor jeweils in einer Stellung angeordnet sind, in der sie in ihrer Schnittstellung jeweils einem kleineren Zwischenraum des gegenüberliegenden Pflückrotors gegenüberliegen. Dieses wechselweise Verhältnis der Zwischenräume zueinander bedeutet, dass ein Pflanzenstängel auf zumindest der der Messerklinge gegenüber liegenden Seite seiner Bewegungsbahn von zwei eng zueinander stehenden benachbarten Einzugskanten des ersten Pflückrotors bogenförmig abgestützt ist, während die einen größeren Zwischenraum bildenden, der Messerklinge vor- und nacheilenden benachbarten Einzugskanten des zweiten Pflückrotors es dem Pflanzenstängel erlauben, bogenförmig in diesen größeren Zwischenraum auszuweichen, in dem dann die vorgespannt gehaltene Seite des Pflanzenstängels der Messerklinge zugewandt gehalten ist.

Die Erfindung ist in den beigefügten Ansprüche definiert.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf ein Paar von Pflückrotoren einer Pflückvorrichtung in einer ersten Drehstellung,
- Fig. 2:: eine Ansicht des in Fig. 1 gezeigten Pflückrotorenpaares in einer zweiten Drehstellung,
- Fig. 3:: eine Ansicht auf ein alternativ ausgestaltetes Paar von Pflückrotoren einer Pflückvorrichtung in einer ersten Drehstellung,
- Fig. 4:: eine Ansicht des in Fig. 3 gezeigten Pflückrotorenpaares in einer zweiten Drehstellung.

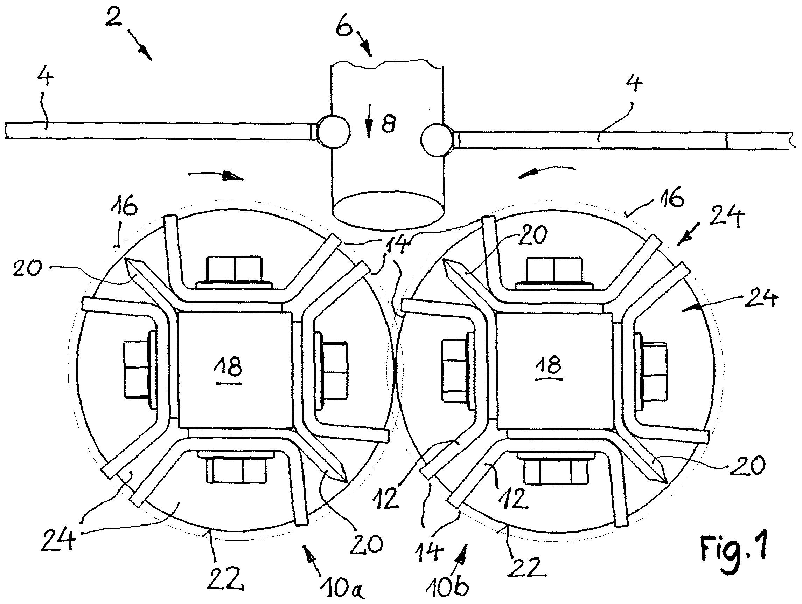

In Fig. 1 ist eine schematische Ansicht auf ein Paar von Pflückrotoren 10a, 10 b in einer Pflückvorrichtung 2 gezeigt. Oberhalb der beiden Pflückrotoren 10a, 10b befinden sich zwei Pflückplatten 4, die zwischen sich einen Pflückspalt 6 begrenzen. Bei der Ernte von stängeligem Halmgut werden die Pflanzenstängel 8 mit den Pflückrotoren 10a, 10b nach unten gezogen. Fruchtstände, die sich am Pflanzenstängel 8 befinden, werden von den seitlichen Kanten des Pflückspaltes 6 vom Pflanzenstängel 8 abgerissen. Die Fruchtstände werden dann im Vorsatzgerät separat abgefördert und weiterverarbeitet, während die Pflanzenstängel von den Pflückrotoren 10a, 10b zerkleinert und nach unten hin auf das Feld abgeworfen werden.

Auf der Umfangsfläche der Pflückrotoren 10a, 10b sind Einzugskörper 12 angeordnet. Die Einzugskörper 12 sind so gestaltet, dass sich an ihnen im äußeren Umfangsbereich Einzugskanten 14 befinden, die bei der gegenläufigen Drehbewegung der Pflückrotoren 10a, 10b einen Pflanzenstängel 8 im Verlauf der Drehbewegung seitlich erfassen, beschleunigen, nach unten ziehen und dann abwerfen. Bei der Drehbewegung der Pflückrotoren 10a, 10b beschreiben die Einzugskörper 12 mit ihren Einzugskanten 14 jeweils einen Hüllkreis 16, in dem die Einzugskörper 12 mit den Einzugskanten 14 umlaufen. Die Rotorwellen 18 der Pflückrotoren 10a, 10b sind so nah zueinander positioniert, dass sich die Hüllkreise 16 der beiden Pflückrotoren 10a, 10b in einem Winkelbereich überschneiden.

Um die Pflanzenstängel 8 nicht nur nach unten zu befördern, sondern diese auch dabei zu schneiden, befinden sich auf den Pflückrotoren 10a, 10b auch zusätzliche Messerklingen 20. Die Messerklingen 20 laufen im Hüllkreis 22 um. Im Ausführungsbeispiel berühren sich die Hüllkreise 22 der Messerklingen der beiden Pflückrotoren 10a, 10b in einem Punkt, sie überschneiden sich jedoch nicht. Die Größe der Hüllkreise sowie die Entfernung der jeweiligen Hüllkreise voneinander kann in einem Vorsatzgerät abweichend vom Ausführungsbeispiel gestaltet werden.

Zwischen benachbarten Einzugskanten 14 an den Einzugskörpern 12 befindet sich bei den Pflückrotoren 10a, 10b jeweils ein Zwischenraum 24. Durch unterschiedliche Abstände der aufeinander folgenden Einzugskanten 14 voneinander ergeben sich zwischen den benachbarten Einzugskanten 14 unterschiedlich große Zwischenräume 24, je nachdem, welche benachbarten Einzugskanten 14 man betrachtet. Auf beiden Pflückrotoren 10a, 10b in Fig. 1 befinden sich zwei benachbarte Einzugskanten einerseits vergleichsweise nahe beieinander, und wenn man in der Betrachtung der Zwischenräume 24 bei einem Paar der Einzugskanten 14 um eine Einzugskante 14 weiter springt, ein größerer Zwischenraum 24. So sind an den Pflückrotoren 10a, 10b in einer kontinuierlichen Abfolge größere und kleinere Zwischenräume 24 ausgebildet.

In Fig. 1 befindet sich der Pflanzenstängel 8 mit seinem Fuß noch außerhalb der Hüllkreise 16 der Einzugskanten, so dass die Pflückrotoren 10a, 10b den Pflanzenstängel 8 noch nicht erfasst haben.

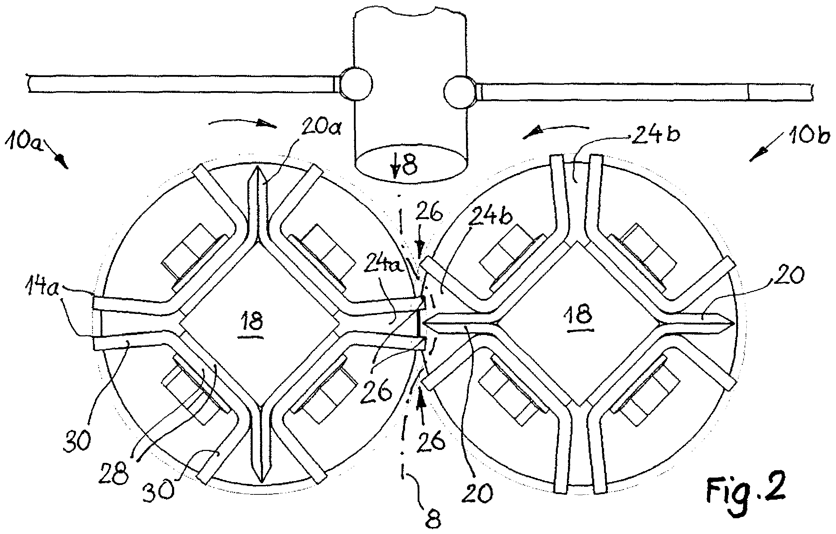

In Fig. 2 ist angedeutet, wie sich der Pflanzenstängel 8 weiter bewegt hat, wenn sich die Pflückrotoren 10a, 10b aus der in Fig. 1 gezeigten Drehstellung in die in Fig. 2 gezeigte Drehstellung weitergedreht haben. In der in Fig. 2 gezeigten Darstellung ist erkennbar, dass der Pflanzenstängel 8 im Bereich der Pflückrotoren 10a, 10b im mittleren Bereich auf den Einzugskanten 14a aufliegt, die den Pflanzenstängel 8 in diesem Abschnitt in den gegenüberliegenden Zwischenraum 24b hineindrücken, der sich im Bereich des Pflückrotors 10b befindet. Da der Pflanzenstängel 8 oberhalb und unterhalb der Einzugskanten 14a von den Einzugskanten 14b gegengehalten wird, ergibt sich ein bogenförmiger Verlauf des Pflanzenstängels 8, bei dem der Pflanzstängel 8 in den Zwischenraum 24b am Pflückrotor 10b hineinragt.

Aus der Ansicht in Fig. 2 ist erkennbar, dass der Pflanzenstängel 8 in der gezeigten Förderposition im Wesentlichen an vier Anlagepunkten 26 auf den Pflückrotoren 10a, 10b aufliegt, nämlich an den beiden Einzugskanten 14a des Pflückrotors 10a und den weiter voneinander entfernten Einzugskanten 14b, die zwischen sich den Zwischenraum 24b ausbilden und an dem Pflückrotor 10b ausgebildet sind. Weil der Zwischenraum 24b größer ist als der Zwischenraum 24a, kann der Pflanzenstängel 8 in seinem Durchgang durch die die beiden Pflückrotoren 10a, 10b passierenden Förderstrecke eine bogenförmige Gestalt annehmen. In der Bogenform ist die der Messerklinge 20 zugewandte Oberseite des Pflanzenstängels 8 durch die Bogenform besonders vorgespannt, während die dem Zwischenraum 24a zugewandte Seite des Pflanzenstängels 8 eher gestaucht ist. Wenn nun auf der vorgespannten Seite des Pflanzenstängels 8 die Messerklinge 20 im Verlauf der Drehbewegung der Pflückrotoren 10a, 10b in den Pflanzenstängel eindringt, ergibt sich wegen der Vorspannung der der Messerklinge 20 zugewandten Seite des Pflanzenstängels 8 ein sauberer und vergleichsweise weniger kraftintensiver Schnitt des Pflanzenstängels 8 in diesem Bereich. Die Messerklinge 20 ist dabei im Verhältnis zu den gegenüberliegenden Einzugskanten 14 so angeordnet, dass sie in der gezeigten Drehstellung genau in den Zwischenraum 24a im gegenüberliegenden Pflückrotor 10a hineinzeigt. In dieser Drehstellung ist der Pflanzenstängel 8 bereits von der Messerklinge 20 vollständig durchgeschnitten worden.

Bei einer weiteren Drehung aus der in Fig. 2 gezeigten Drehstellung heraus würde die nacheilende Einzugskante 14b den Pflanzenstängel 8 weiter nach unten ziehen, während dieser auf der gegenüberliegenden Seite noch von der nacheilenden Einzugskante 14a, die aber der nacheilenden Einzugskante 14b voreilt, gegengehalten ist. Obwohl also der Pflanzenstängel 8 im Bereich der Messerklinge 20 durchschnitten worden ist, können die Pflückrotoren 10a, 10b den Pflanzenstängel 8 dadurch weiter nach unten ziehen. Dabei wird der bereits abgeschnittene Abschnitt des Pflanzenstängels 8 von den beiden voreilenden Einzugskanten 14a, 14b nach unten abgeworfen.

Wenn sich die Pflückrotoren 10a, 10b aus der in Fig. 2 gezeigten Drehstellung weiter in Rotationsrichtung drehen, so nähert sich eine der beiden am Pflückrotor 10a ausgebildeten Messerklingen 20a der Drei-Uhr-Position an, während sich dann der kleinere Zwischenraum 24b in Höhe der Messerklinge 20a befindet. Auf diese Weise wechseln die Klingenseiten und die Stützseiten bei der Drehbewegung der Pflückrotoren 10a, 10b laufend zwischen den beiden Pflückrotoren 10a, 10b hin und her.

Im Ausführungsbeispiel sind die Einzugskörper 12 als Winkelprofile 28 ausgebildet, von denen Schenkel 30 in radialer Richtung von der Rotorwelle 18 abstehen. Im Ausführungsbeispiel sind Winkelprofile 28 für die Messerklingen 20 und für die Einzugskanten 14 übereinandergelegt und von jeweils gemeinsamen Schrauben auf der Rotorwelle 18 gehalten. Hierdurch ergibt sich eine kompakte und leicht montierbare Befestigung der jeweiligen Komponenten.

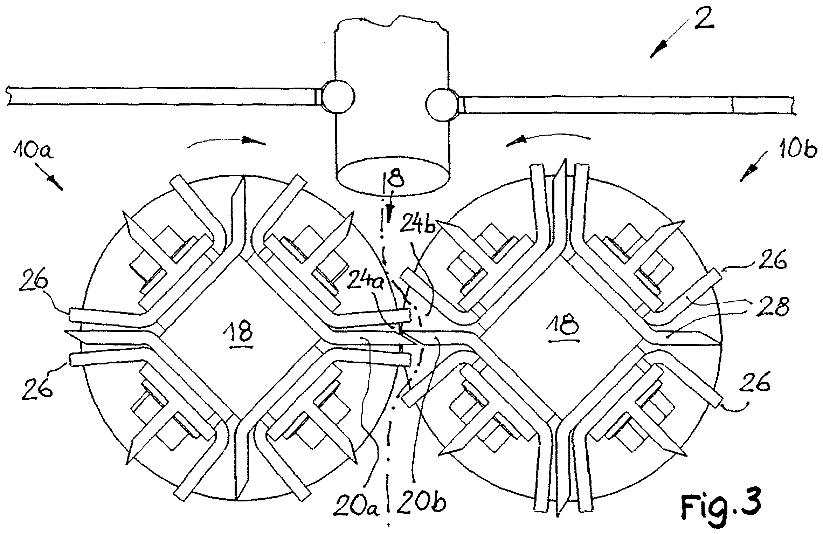

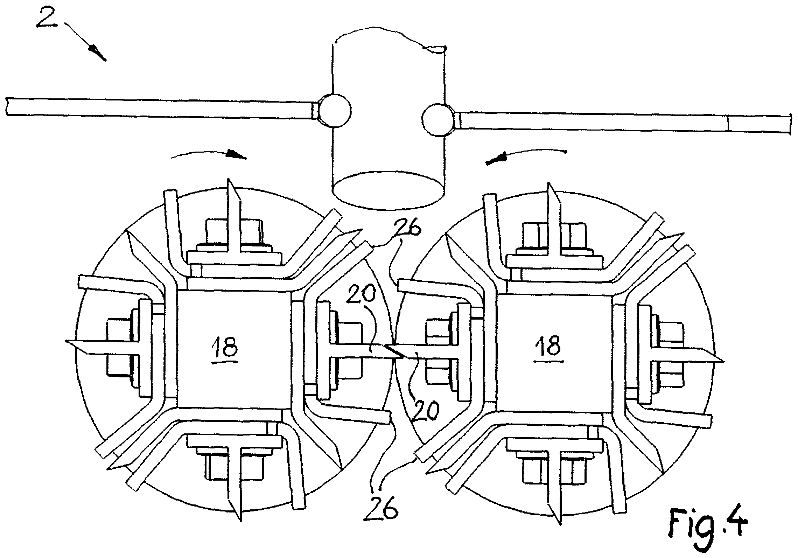

In den Figuren 3 und 4 sind Ansichten auf ein alternativ ausgestaltetes Paar von Pflückrotoren 10a, 10b einer Pflückvorrichtung 2 gezeigt. Hier befindet sich eine Messerklinge 20 nicht nur auf einer Seite der beiden Pflückrotoren 10a, 10b in einer Schnittstelle, sondern hier sind auf beiden Seiten zusammenwirkende Messerklingen 20a, 20b ausgebildet, mit denen ein Pflanzenstängel 8 im Schnittbereich durchgeschnitten wird. Der Pflanzenstängel 8 ist aber wie bei dem in Figuren 1 und 2 gezeigten Ausführungsbeispiel über zumindest vier Anlagepunkte 26 in einer bogenförmigen Vorspannung gehalten, so dass zumindest eine der beiden Messerklingen 20a, 20b in einem vorgespannten Bereich in den Pflanzenstängel 8 einschneidet.

Damit die Messerklingen 20a, 20b besser miteinander zusammenwirken können, sind beide Messerklingen 20a, 20b einseitig angeschliffen. Bei der Rotationsbewegung der Pflückrotoren 10a, 10b gleiten die Schnittflächen des Anschliffs der Messerklingen 20a, 20b übereinander, so dass sich die beiden Messerklingen 20a, 20b dabei selbst reinigen.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Vorsatzgerät zum Anbau an eine Erntemaschine mit einer Anzahl von nebeneinander über die Arbeitsbreite verteilt angeordneten Pflückvorrichtungen (2), die Pflückvorrichtungen (2) weisen jeweils einen von Pflückplatten (4) seitlich begrenzten Pflückspalt (6) auf, unter denen zumindest ein erster und ein zweiter gegenläufig rotierend antreibbarer Pflückrotor (10a, 10b) angeordnet sind, die Pflückrotoren (10a, 10b) sind jeweils mit mehreren in radialer Richtung hervorstehenden, an Einzugskörpern (12) ausgebildeten Einzugskanten (14) versehen, deren Hüllkreise (16) ineinander kämmen, und benachbarte Einzugskanten (14) des ersten Pflückrotors (2) begrenzen zwischen sich innerhalb des Hüllkreises (16) gelegene Zwischenräume (24), die sich entlang der Längsrichtung des ersten Pflückrotors (2) erstrecken und in die die Einzugskanten (14) des gegenüberliegenden zweiten Pflückrotors (10b) während eines Umlaufs der ersten und zweiten Pflückrotoren (10a, 10b) eintauchen, **dadurch gekennzeichnet, dass** die Einzugskanten (14) an den Einzugskörpern (12) auf dem ersten und zweiten Pflückrotor (10a, 10b) so im Verhältnis zueinander angeordnet sind, dass während einer Umlaufbewegung des ersten und zweiten Pflückrotors (10a, 10b) zwei benachbarte Einzugskanten (14) des ersten Pflückrotors (10a) in ihrem Wirkbereich in die nach unten gerichtete Bewegungsbahn eines Pflanzenstängels (8) den Pflanzenstängel (8) zeitweise gegen die im Verhältnis zu den zwei benachbarten Einzugskanten (14) des ersten Pflückrotors (10a) vor- und nacheilenden Einzugskanten (14) des zweiten Pflückrotors (10b) gedrückt halten und den Pflanzenstängel (8) durch die vier Anlagepunkte (26) des Pflanzenstängels (8) an die Einzugskanten (14) des ersten und zweiten Pflückrotors (10a, 10b) in eine dem Hüllkreis (16) des ersten Pflückrotors (10a) angenäherte Bogenform spannen, und auf dem zweiten Pflückrotor (10b) eine Messerklinge (20) zwischen den vor- und nacheilenden Einzugskanten (14) des zweiten Pflückrotors (10a) angeordnet ist, die in die Außenseite des in Bogenform gespannten Pflanzenstängels (8) einschneidet.

2. Vorsatzgerät nach Anspruch 1, **dadurch gekennzeichnet, dass dadurch gekennzeichnet, dass** die Hüllkreise (16) der zwei benachbarten Einzugskanten (14) des ersten Pflückrotors (10a) über die Vorderkante der darüber angeordneten Pflückplatte (4) in die nach unten gerichtete Bewegungsbahn eines zwischen den Pflückplatten (4) nach unten gezogenen Pflanzenstängels (8) hineinragen.

3. Vorsatzgerät nach Anspruch 2, **dadurch gekennzeichnet, dass dadurch gekennzeichnet, dass** auch die Hüllkreise (16) der zu den zwei benachbarten Einzugskanten (14) des ersten Pflückrotors (10a) vor- und nacheilenden Einzugskanten (14) des zweiten Pflückrotors (10b) über die Vorderkante der darüber angeordneten Pflückplatte (4) in die nach unten gerichtete Bewegungsbahn eines zwischen den Pflückplatten (4) nach unten gezogenen Pflanzenstängels (8) hineinragen.

4. Vorsatzgerät nach einem der vorhergehenden Ansprüche, **dadurch gekennzeichnet, dass** die Schnittbewegung der Messerklinge (20) beim Umlauf des ersten und zweiten Pflückrotors (10a, 10b) in den Zwischenraum (24) zwischen den zwei benachbarten Einzugskanten (14) des ersten Pflückrotors (10a) gerichtet ist.

5. Vorsatzgerät nach einem der vorhergehenden Ansprüche, **dadurch gekennzeichnet, dass** auf dem ersten Pflückrotor (10a) eine Messerklinge (20) zwischen den benachbarten Einzugskanten (14) angeordnet ist, die mit der Messerklinge (20) auf dem zweiten Pflückrotor (10b) interagiert.

6. Vorsatzgerät nach Anspruch 5, **dadurch gekennzeichnet, dass** die Messerklingen (20) einseitig angeschliffen sind.

7. Vorsatzgerät nach einem der vorhergehenden Ansprüche, **dadurch gekennzeichnet, dass** die Einzugskörper (12) als auf einer Rotorwelle (18) des Pflückrotors (10a, 10b) befestigte Winkelprofile (28) ausgebildet sind.

8. Vorsatzgerät nach einem der vorhergehenden Ansprüche, **dadurch gekennzeichnet, dass** die Messerklingen (20) am äußeren Ende eines Schenkels (30) eines Winkelprofils (28) ausgebildet sind, das auf einer Rotorwelle (18) eines Pflückrotors (10a, 10b) befestigt ist.

9. Vorsatzgerät nach einem der vorhergehenden Ansprüche 7 und 8, **dadurch gekennzeichnet, dass** die Winkelprofile (28) der Einzugskörper (12) und die Winkelprofile (28) der Messerklingen (20) jeweils von gemeinsamen Schrauben auf der Rotorwelle (18) gehalten sind.

10. Vorsatzgerät nach einem der vorhergehenden Ansprüche 8 und/oder 9, **dadurch gekennzeichnet, dass** zwei Schenkel (30) benachbarter Winkelprofile (28) gemeinsam eine Messerklinge (20) bilden.

11. Vorsatzgerät nach einem der vorhergehenden Ansprüche, **dadurch gekennzeichnet, dass** die Hüllkreise der Einzugskanten (14) einen größeren Durchmesser haben als die Hüllkreise der Messerklingen (20).

12. Vorsatzgerät nach einem der vorhergehenden Ansprüche, **dadurch gekennzeichnet, dass** Zwischenräume (24) zwischen benachbarten Einzugskanten (14) des ersten und zweiten Pflückrotors (10a, 10b) unterschiedlich große Kreisbogenanteile einnehmen, wobei die Messerklingen (20) am ersten und zweiten Pflückrotor (10a, 10b) jeweils in einer Stellung angeordnet sind, in der sie in ihrer Schnittstellung jeweils einem kleineren Zwischenraum (24) des gegenüberliegenden Pflückrotors (10a, 10b) gegenüberliegen.

## Claims

1. An attachment for mounting on a harvesting machine having a number of picking devices (2) arranged adjacent to one another and distributed over the working width, the picking devices (2) each having a picking gap (6) delimited laterally by picking plates (4), under which at least a first and a second picking rotor (10a, 10b), which are drivable to rotate in opposite directions, are arranged, the picking rotors (10a, 10b) are each provided with several drawing edges (14) which protrude in the radial direction and are formed on drawing bodies (12), the envelope circles (16) of which mesh with one another, and adjacent drawing edges (14) of the first picking rotor (2) delimit intermediate spaces (24) located between them within the envelope circle (16), which extend along the longitudinal direction of the first picking rotor (2) and into which the drawing edges (14) of the opposite second picking rotor (10b) plunge during a rotation of the first and second picking rotors (10a, 10b), **characterized in that** the drawing edges (14) on the drawing bodies (12) on the first and second picking rotor (10a, 10b) are arranged in relation to one another in such a way that, during a rotation movement of the first and second picking rotor (10a, 10b), two adjacent drawing edges (14) of the first picking rotor (10a), in their effective range in the downward-directed movement path of a plant stalk (8), hold the plant stalk (8) temporarily pressed against the drawing edges (14) of the second picking rotor (10b), which are leading and trailing in relation to the two adjacent drawing edges (14) of the first picking rotor (10a), and stretch the plant stalk (8) through the four contact points (26) of the plant stalk (8) onto the drawing edges (14) of the first and second picking rotor (10a, 10b) into a curved shape approximating the envelope circle (16) of the first picking rotor (10a), and a knife blade (20) is arranged on the second picking rotor (10b) between the leading and trailing drawing edges (14) of the second picking rotor (10a), which cuts into the outside of the plant stalk (8) stretched in a curved shape.

2. The attachment according to Claim 1, **characterized in that** the envelope circles (16) of the two adjacent drawing edges (14) of the first picking rotor (10a) protrude over the front edge of the picking plate (4) arranged above it into the downward-directed movement path of a plant stalk (8) pulled downward between the picking plates (4).

3. The attachment according to Claim 2, **characterized in that** the envelope circles (16) of the drawing edges (14) of the second picking rotor (10b), which are leading and trailing in relation to the two adjacent drawing edges (14) of the first picking rotor (10a), protrude over the front edge of the picking plate (4) arranged above it into the downward-directed movement path of a plant stalk (8) pulled downward between the picking plates (4).

4. The attachment according to any one of the preceding claims, **characterized in that** the cutting movement of the knife blade (20) during the rotation of the first and second picking rotor (10a, 10b) is directed into the intermediate space (24) between the two adjacent drawing edges (14) of the first picking rotor (10a).

5. The attachment according to any one of the preceding claims, **characterized in that** a knife blade (20) is arranged on the first picking rotor (10a) between the adjacent drawing edges (14) and interacts with the knife blade (20) on the second picking rotor (10b).

6. The attachment according to Claim 5, **characterized in that** the knife blades (20) are ground on one side.

7. The attachment according to any one of the preceding claims, **characterized in that** the drawing bodies (12) are designed as angle profiles (28) fastened on a rotor shaft (18) of the picking rotor (10a, 10b).

8. The attachment according to any one of the preceding claims, **characterized in that** the knife blades (20) are formed at the outer end of a leg (30) of an angle profile (28) which is fastened on a rotor shaft (18) of a picking rotor (10a, 10b) .

9. The attachment according to one of preceding Claims 7 and 8, **characterized in that** the angle profiles (28) of the drawing bodies (12) and the angle profiles (28) of the knife blades (20) are each held on the rotor shaft (18) by common screws.

10. The attachment according to one of preceding Claims 8 and/or 9, **characterized in that** two legs (30) of adjacent angle profiles (28) jointly form a knife blade (20).

11. The attachment according to any one of the preceding claims, **characterized in that** the envelope circles of the drawing edges (14) have a larger diameter than the envelope circles of the knife blades (20).

12. The attachment according to any one of the preceding claims, **characterized in that** intermediate spaces (24) between adjacent drawing edges (14) of the first and second picking rotors (10a, 10b) occupy circular arc portions of different sizes, wherein the knife blades (20) on the first and second picking rotors (10a, 10b) are each arranged in a position in which, in their cutting position, they each are opposite to smaller intermediate space (24) of the opposite picking rotor (10a, 10b).

## Revendications

1. Appareil adaptable destiné à être monté sur une récolteuse et comprenant un certain nombre de dispositifs cueilleurs (2) disposés côte à côte sur la largeur de travail, les dispositifs cueilleurs (2) présentant chacun une fente de cueillette (6) délimitée latéralement par des plaques de cueillette (4), sous lesquelles sont disposés au moins un premier et un second rotor cueilleur (10a, 10b) qui peuvent être entraînés en rotation inverse, les rotors cueilleurs (10a, 10b) étant chacun pourvus d'une pluralité de bords d'alimentation (14) qui font saillie dans la direction radiale et sont formés sur des corps d'alimentation (12) dont les cercles enveloppants (16) s'engrènent les uns avec les autres, et les bords d'alimentation (14) adjacents du premier rotor cueilleur (2) délimitent des espaces intermédiaires (24) situés entre eux à l'intérieur du cercle enveloppant (16), qui s'étendent dans la direction longitudinale du premier rotor cueilleur (2) et plongent dans les bords d'alimentation (14) du second rotor cueilleur (10b) opposé pendant un mouvement orbital des premier et second rotors cueilleurs (10a, 10b), **caractérisé en ce que** les bords d'alimentation (14) situés au niveau des corps d'alimentation (12) des premier et second rotors cueilleurs (10a, 10b) sont disposés l'un par rapport à l'autre de telle sorte que, lors d'un mouvement orbital des premier et second rotors cueilleurs (10a, 10b), deux bords d'alimentation (14) adjacents du premier rotor cueilleur (10a) maintiennent, dans leur zone d'action dans le chemin de déplacement dirigé vers le bas d'une tige de plante (8), la tige de plante (8) pressée temporairement contre les bords d'alimentation (14) du second rotor cueilleur (10b) qui sont situés en avant et en arrière par rapport aux deux bords d'alimentation (14) adjacents du premier rotor cueilleur (10a) et serrent la tige de plante (8) par le biais des quatre points d'appui (26) de la tige de plante (8) sur les bords d'alimentation (14) du premier et du second rotor cueilleur (10a, 10b) en forme d'arc se rapprochant du cercle enveloppant (16) du premier rotor cueilleur (10a), et une lame de couteau (20) est disposée sur le second rotor cueilleur (10b) entre les bords d'alimentation (14) avant et arrière du second rotor cueilleur (10a), laquelle lame de couteau pénètre par incision dans le côté extérieur de la tige de plante (8) serrée en forme d'arc.

2. Appareil adaptable selon la revendication 1, **caractérisé en ce que** les cercles enveloppants (16) des deux bords d'alimentation (14) adjacents du premier rotor cueilleur (10a) dépassent du bord avant de la plaque de cueillette (4) disposée au-dessus dans le chemin de déplacement dirigé vers le bas d'une tige de plante (8) tirée vers le bas entre les plaques de cueillette (4).

3. Appareil adaptable selon la revendication 2, **caractérisé en ce que** les cercles enveloppants (16) des bords d'alimentation (14) des deux bords d'alimentation (14) du second rotor cueilleur (10b) situés en avant et en arrière par rapport aux deux bords d'alimentation adjacents du premier rotor cueilleur (10a) dépassent du bord avant de la plaque de cueillette (4) disposée au-dessus dans le chemin de déplacement dirigé vers le bas d'une tige de plante (8) tirée vers le bas entre les plaques de cueillette (4).

4. Appareil adaptable selon l'une des revendications précédentes, **caractérisé en ce que** le mouvement de coupe de la lame de couteau (20) lors du mouvement orbital des premier et second rotors cueilleurs (10a, 10b) est dirigé dans l'espace intermédiaire (24) entre les deux bords d'alimentation (14) adjacents du premier rotor cueilleur (10a).

5. Appareil adaptable selon l'une des revendications précédentes, **caractérisé en ce qu'**une lame de couteau (20) est disposée sur le premier rotor cueilleur (10a) entre les bords d'alimentation (14) adjacents et coopère avec la lame de couteau (20) sur le second rotor cueilleur (10b).

6. Appareil adaptable selon la revendication 5, **caractérisé en ce que** les lames de couteau (20) sont meulées d'un côté.

7. Appareil adaptable selon l'une des revendications précédentes, **caractérisé en ce que** les corps d'alimentation (12) sont réalisés sous forme de profilés angulaires (28) fixés à un arbre de rotor (18) du rotor cueilleur (10a, 10b).

8. Appareil adaptable selon l'une des revendications précédentes, **caractérisé en ce que** les lames de couteau (20) sont formées à l'extrémité extérieure d'une branche (30) d'un profilé angulaire (28) qui est fixé à un arbre de rotor (18) d'un rotor cueilleur (10a, 10b).

9. Appareil adaptable selon l'une des revendications précédentes 7 et 8, **caractérisé en ce que** les profilés angulaires (28) du corps d'alimentation (12) et les profilés angulaires (28) des lames de couteau (20) sont chacun maintenus sur l'arbre de rotor (18) par des vis communes.

10. Appareil adaptable selon l'une des revendications précédentes 8 et/ou 9, **caractérisé en ce que** deux branches (30) de profilés angulaires (28) adjacents forment ensemble une lame de couteau (20).

11. Appareil adaptable selon l'une des revendications précédentes, **caractérisé en ce que** les cercles enveloppants des bords d'alimentation (14) ont un diamètre plus grand que les cercles enveloppants des lames de couteau (20).

12. Appareil adaptable selon l'une des revendications précédentes, **caractérisé en ce que** des espaces intermédiaires (24) entre des bords d'alimentation (14) adjacents des premier et second rotors cueilleurs (10a, 10b) occupent des portions d'arc de cercle de différentes tailles, dans lequel les lames de couteau (20) sur les premier et second rotors cueilleurs (10a, 10b) sont disposées chacune dans une position dans laquelle, dans leur position de coupe, elles se trouvent chacune en face d'un espace intermédiaire plus petit (24) du rotor cueilleur (10a, 10b) opposé.
